# EUROPEAN PATENT APPLICATION

(11) **EP 3 957 382 A1**
(43) Date of publication of application: **23.02.2022**
(21) Application number: 20791257.7
(22) Date of filing: 17.04.2020
(51) Int. Cl.: B01D 46/52

(54) **FRAMELESS DUCT FILTER**

(30) Priority: 19.04.2019 RU 2019111945
(71) Applicant: Joint-Stock Company "Tion Smart Microclimate", Novosibirsk, 630090 (RU)
(72) Inventor: TRUBITSYN, Dmitry Aleksandrovich, Novosibirsk, 630090 (RU); SMIRNOV, Roman Nikolaevich, Novosibirsk, 630058 (RU)
(74) Representative: Osmans, Voldemars
(86) International application number: PCT/RU2020/050076
(87) International publication number: WO 2020/214068

(57) **Abstract**

The invention relates to the field of ventilation, mainly ventilation of living quarters. Frameless channel filter comprises smaller base with guide ring, larger filter base in form of ring with bead and inner auxiliary element, wherein on outer surface of shoulder of larger base is fixed sealing ring, corrugated filter material with opening angle of 10-15 degrees, wherein the corrugated filter material is hermetically connected to the bases and is gradually expanding from the smaller base to the larger base. The technical result consists in improvement of efficiency, as well as in ease of installation of frameless channel filter in air channel.

## Description

### Field of the invention

The invention relates to the field of ventilation, mainly ventilation of living quarters. It is designed to filter the air entering from the outdoor to the indoor.

### Background of the invention

An air filter (CN 201157731) is known. The filter element is fixed on the outside of the main body, the base case is a surface cylinder that is cylindrical, and the Venturi tube is placed inside the base case, wherein the position of the Venturi tube corresponds to the position of the filter. There is a rubber sealing ring between the channel of the filter cartridge and the base.

The disadvantage of this filter is the complex design due to the presence of a large number of elements such as Venturi tube, multi-plane bore, etc.

Additionally, an aerosol filter element (RU 2283686) is known, comprising a fine filter with a purified air branch tube, a hydrophilic filter made in the form of a perforated shell ring with upper and lower covers, on the outer surface of which a coalescing shell enclosed in a mesh case is installed. The fine filter is placed in the perforated shell ring with a gap forming an annular cavity in which elastic elements are installed. The filter element comprises a spring washer installed between the end of the fine filter and the top cover, and a bypass device made in the form of channels, located in one of the covers. The elastic elements are made in the form of zigzag ribbons, with the outer projections of the ribbon fixed on the inner surface of the perforated shell ring, and the inner projections interact with the lateral surface of the fine filter. The channels of the bypass device are made at an angle to the longitudinal axis of the element. The bypass device channels can be equipped with spring-loaded back pressure valves.

The disadvantages of such a filter element include the fact that it can only be used in vehicles such as car cabins, sealed car bodies, aircraft interiors, etc., as well a complex design due to the presence of a large number of parts.

A filter for gas cleaning from liquid aerosol particles is also known (RU 8629 publ. 16.12.1998). The filter comprises a housing with inlet and outlet nozzles, a filtering element made in the form of a cone from porous material, and a collector in the form of a cone with a drain pipe installed under the apex of the element, wherein the conical collector is made with hollow walls, the inner part of which is interconnected to form a conical cavity, in which the apex of the filter element is located, wherein the cavity formed by the walls of the conical collector and their upper part is communicated with hollow radial pipes, with ejection holes, wherein the filter element is equipped with perforated tubes placed in the thickness of its wall parallel to the generatrixes of the cone, the lower ends of which tubes are located in the lower part of the cavity of the conical collector.

The disadvantage of such a filter is the narrow area of its application, namely its use in the field of oil refining and mass exchange equipment and, as a consequence, the impossibility of its use as a filter in ventilation systems, together with insufficient purification from aerosols due to the use of filter material with large pores, which material is also subject to destruction.

The closest solution is a cone channel filter for ventilation systems (RU185112 published 21.11.2018 bull. No. 33 - prototype). This device consists of a frame and a filtering material, and also comprises an inlet/outlet supporting frame, depending on the direction of the air flow, a sealing ring, an auxiliary forming element of the frame, a corrugated filtering material attached to the frame with a variable radius of distribution along the length of the filter, wherein the filtering material is permanently connected to the elements of its frame, and wherein the forming element of the filter frame is a cover-like element that borders the corrugated filtering material and prevents the passage of air outside the filtering material.

The disadvantages of such a filter is the presence of a frame, and also the corrugation parameters of the filter material which do not provide an optimal ratio of the effective filtration area and the filtration quality while maintaining the required dimensions of the filter itself, in addition, the disadvantages of such a filter should also include the fact that the base of the filter is not functional in terms of the air flow control in the channel and also in terms of the convenience of installation of the filter in the channel and subsequent re-installation; all of the above affects the air filtration efficiency in ventilation systems supplied through the channel from the outdoor to the indoor.

### Summary of the invention

The task of the claimed device according to the invention is to provide an efficient purification of air entering from the outdoor from aerosols and fine particles, while providing the convenience of installation of frameless channel filter in the air channel.

The technical result according to independent claim 1 of the present invention is to improve the air filtration efficiency in ventilation systems supplied through the air channel from the outdoor to the indoor owing to the design of the frameless channel filter, which allows optimal positioning of the surfaces of the corrugated filter material in the closed space of the air channel, which makes it possible to increase the area of the filtering surface, reduce energy consumption for the filtration process, and ensure the passage of air flow through the surfaces of the corrugated filter material.

The technical result according to independent claim 1 of the present invention is achieved due to the fact that the frameless channel filter comprises a smaller base with a guide ring, a larger filter base in the form of a ring with bead for fixing the filter in the channel, a corrugated filter material, wherein the corrugated filter material is hermetically connected to the bases and is made gradually expanding from the smaller base to the larger base.

It is possible to design the frameless channel filter, in which the corrugated filter material is attached to the bases with an opening angle of 10-15 degrees.

It is possible to design the frameless channel filter in which the guide ring is attached to the smaller base by means of plates.

It is possible to design the frameless channel filter, in which the guide ring further comprises at least three plates.

It is possible to design the frameless channel filter in which the corrugated filter material, which is made gradually expanding from the smaller base to the larger base, has the form of a truncated cone.

It is possible to design the frameless channel filter, in which the corrugated filter material, which is made gradually expanding from the smaller base to the larger base, has the form of a truncated pyramid with rounded faces.

It is possible to design the frameless channel filter using the corrugated filter material with filtration classes G2 to H13.

It is possible to design the frameless channel filter in which a HEPA filter is used as the corrugated filter material.

It is possible to design the frameless channel filter, in which the corrugated filter material is made with a flute height from 11 to 14 mm.

The technical result according to claim 10 of the present invention lies in the convenience of installation of a frameless channel filter in the air channel providing efficient filtration of air in ventilation systems supplied through the channel from the outdoor to the indoor, due to the presence of an internal auxiliary element and a sealing ring.

The technical result according to claim 10 of the present invention is achieved due to the fact that the frameless channel filter comprises a smaller base with a guide ring, a corrugated filter material, a larger filter base in the form of a ring with bead, and an internal auxiliary element, wherein a sealing ring is fixed on the outer surface of the bead of the larger base.

It is possible to design the frameless channel filter, in which the diameter of the bead is less than the diameter of the ring.

It is possible to design the frameless channel filter in which the sealing ring is made of rubber.

It is possible to design the frameless channel filter, in which the smaller base is connected to the guide ring by means of plates configured to serve as a handle when installing the filter.

It is possible to design the frameless channel filter, in which the internal auxiliary element is made in the form of a plate bridge.

It is possible to design the frameless channel filter, in which the inner auxiliary element is made in the form of at least two plate bridges connected in the center and proceeding from the inner surface of the inner auxiliary element.

The technical result according to claim 16 of the present invention consists in increasing the efficiency, and also in the convenience of installation of a frameless channel filter in the air channel, due to the optimal location of the surfaces of a corrugated filter material in the closed space of the air channel and the presence of elements (an internal auxiliary element, a sealing ring) that increase the convenience of filter installation, which allows increasing the filtering surface area, reducing the energy consumption for the filtration process, providing the passage of air flow through the surfaces of the corrugated filter material, and ensuring speed and accuracy of installation of the frameless channel filter in the air channel.

Technical result according to claim 16 of the present invention is achieved due to the fact that the frameless channel filter comprises a smaller base with a guide ring, a larger filter base in the form of a ring with bead, and the internal auxiliary element, wherein the sealing ring is fixed on the outer surface of the bead of the larger base, the corrugated filter material with an opening angle of 10-15 degrees, wherein the corrugated filter material is hermetically connected to the bases and is made gradually expanding from the smaller base to the larger base.

### Description of the drawings

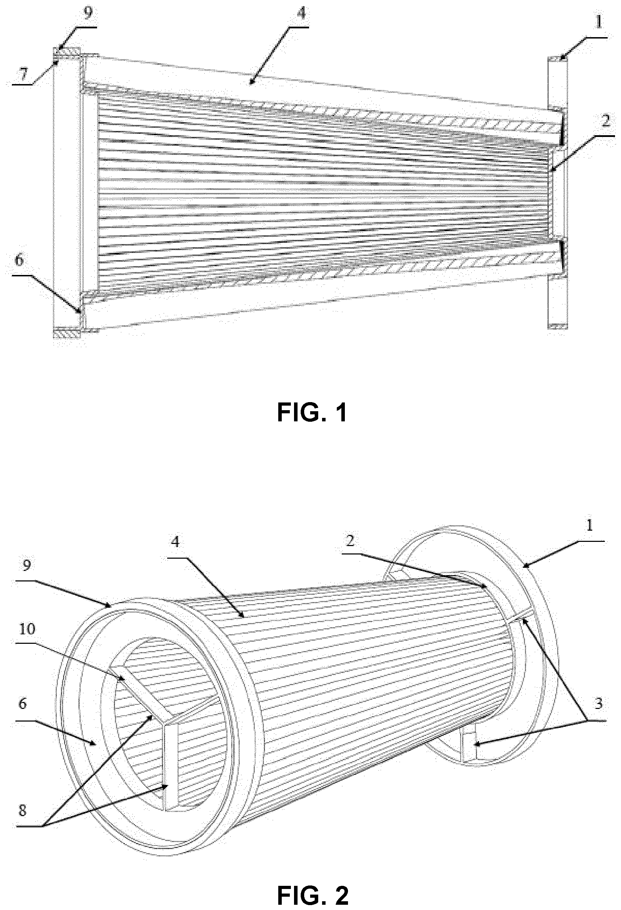

FIG. 1 shows a cross-sectional view of the frameless channel filter.
FIG. 2 shows a three-dimensional model of the frameless channel filter.
FIG. 3 shows a segment of the corrugated filter material.
FIG. 4 shows a portion of the guide ring with the smaller base.

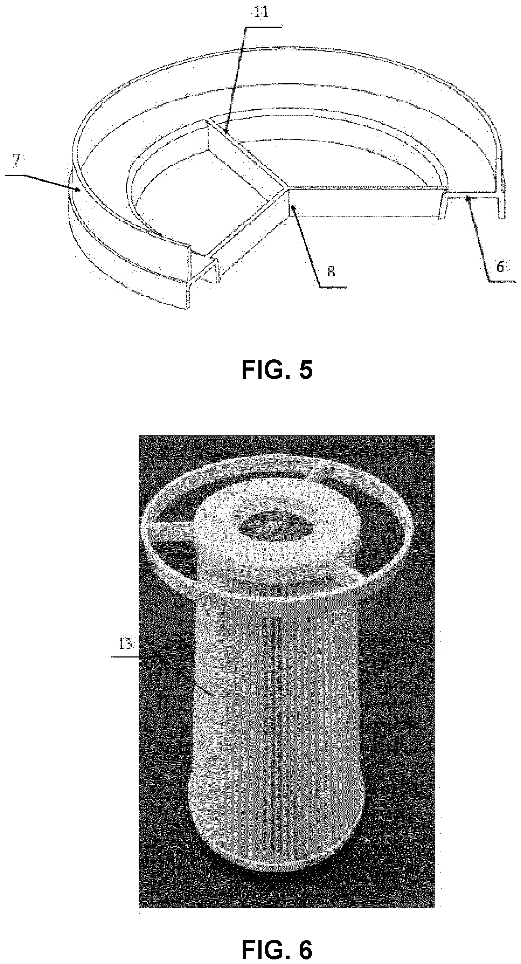

FIG. 5 shows the larger filter base in the form of a ring with bead and the internal auxiliary element.
FIG. 6 shows a photograph of the frameless channel filter, one of the embodiments, wherein the corrugated filter material, which is made gradually expanding from the smaller base to the larger base, has the form of a truncated cone.

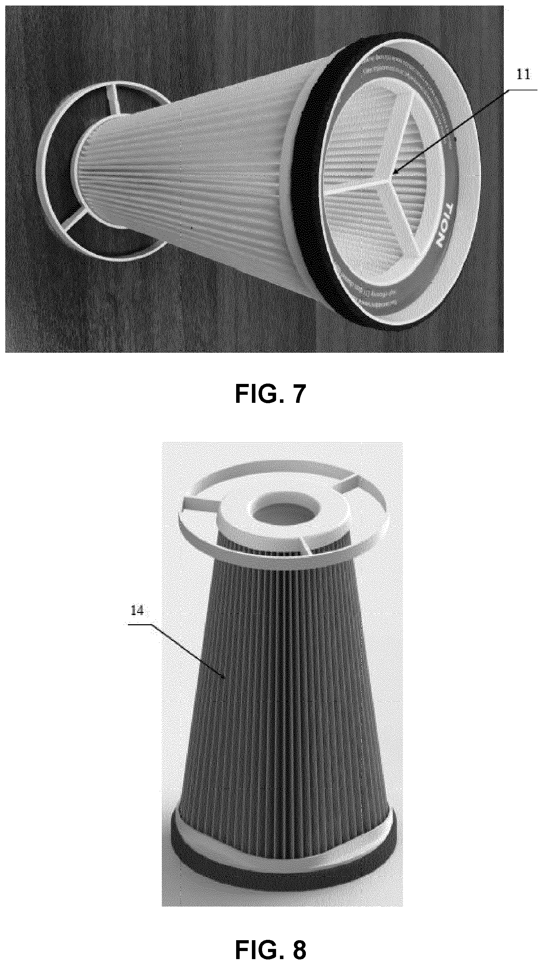

FIG. 7 shows a photograph of the frameless channel filter, one of the embodiments, wherein the corrugated filter material, which is made gradually expanding from the smaller base to the larger base, has the form of a truncated cone.
FIG. 8 shows a photograph of the frameless channel filter, one of the embodiments, wherein the corrugated filter material, which is made gradually expanding from the smaller base to the larger base, has the form of a truncated pyramid with rounded faces.

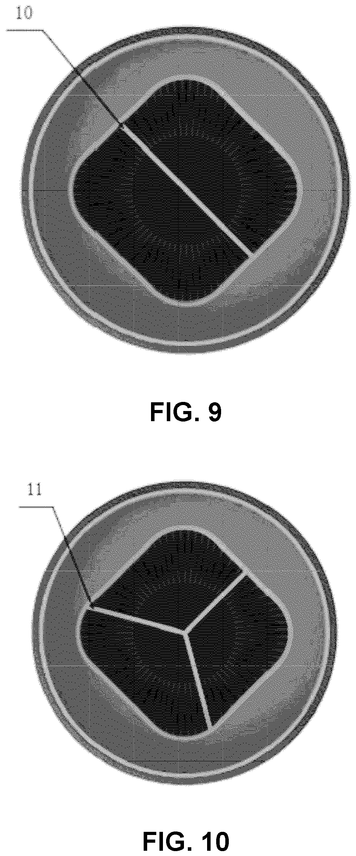

FIG. 9 shows a photograph of the frameless channel filter with one plate bridge.
FIG. 10 shows a photograph of the frameless channel filter with the internal auxiliary element in the form of three plate bridges.
Position 1 is the guide ring;
Position 2 is the smaller base;
Position 3 are the plates;
Position 4 is the corrugated filter material;
Position 5 is the corrugation opening angle;
Position 6 is the ring with bead;
Position 7 is the bead;
Position 8 is the internal auxiliary element;
Position 9 is the sealing ring;
Position 10 is the plate bridge;
Position 11 is the internal auxiliary element in the form of three plate bridges;
Position 12 is the flute height;
Position 13 is the corrugated filter material in the form of a truncated cone;
Position 14 is the corrugated filter material in the form of a truncated pyramid with rounded faces.

### Detailed description of the invention

A frameless channel filter consists of:
a guide ring 1 with a smaller base 2, wherein the smaller base 2 is connected to the guide ring 1 by means of plates 3;
the guide ring 1, the plates 3, and the smaller base 2 are made of plastic, it should be noted that the outer diameter of the guide ring 1 is deliberately smaller than the diameter of the ventilation system channel, for more comfortable installation of the filter in the ventilation system channel;
a corrugated filter material 4 with a corrugation opening angle 5 of 10-15 degrees, wherein a rigid fiber (plastic polyester cloth, fiberglass, paper filtering materials, metal mesh or metal foam) or material consisting of fiberglass fibers with a diameter of 0.5 to 2 microns can be used as the corrugated filter material, one of the options for the filter material can be "HEPA" (High Efficiency Particulate Air or High Efficiency Particulate Arrestance, high efficient particle retention);
a larger filter base made in the form of a ring 6 with bead, the diameter of the bead 7 is smaller than the diameter of the ventilation system channel, for more comfortable installation of the filter in the air channel of the ventilation system, an internal auxiliary element 8 is attached to the ring 6 with bead, the filter bases are made of plastic, wherein a sealing ring 9 made of EPDM rubber is glued on the outer surface of the bead 7, the sealing ring 9 is glued to the outer surface of the bead 7 and provides a tight sealed fit of the frameless channel filter in the air channel (the channel of the heat-insulating pipe) of the ventilation system.

Making the corrugated filter material 4 with the opening angle 5 within the range of 10 to 15 degrees provides an optimal surface area of the filtering material 4, which increases the filtration efficiency, as if the opening angle 5 is less than 10 degrees, then the corrugated filter material 4 collapses and the area of the filtering material decreases, and if the angle 5 is too large (more than 15 degrees), then the working area of the filter material 4 decreases, which leads to deterioration in filtration performance. Also, design of the corrugated filter material 4 with the opening angle 5 in the range from 10 to 15 degrees provides optimal angles of air flow entry into the filtering surface, which allows more thorough filtering of the air, therefore, the filtration efficiency is increased.

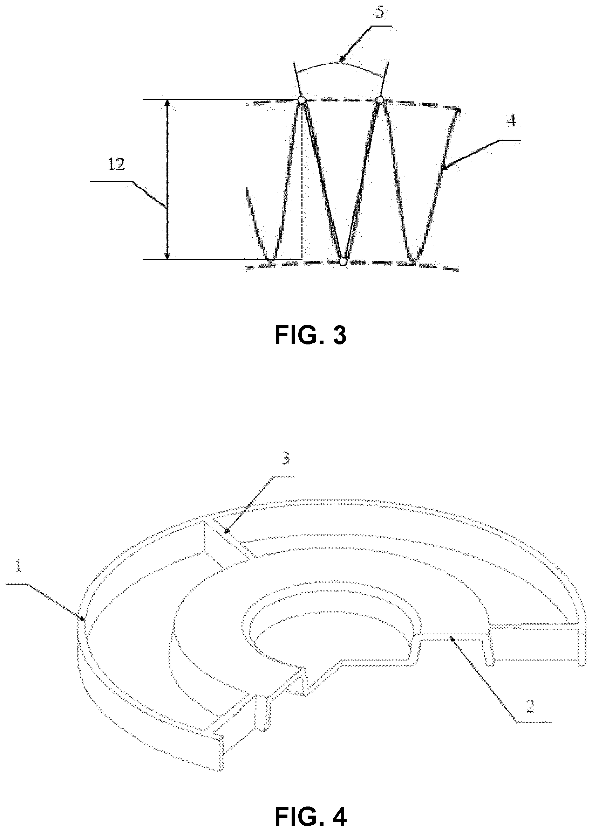

Corrugation opening angle 5 is defined as the angle between two straight lines passing through a common minimum point and two adjacent maximum points (if the corrugation is conventionally represented as a periodic sinusoidal-like function) (see FIG. 3).

The sealed (hermetic) connection of the corrugated filter material 4 with the smaller base 2 and the larger base eliminates possible leaks of uncleaned air, which elimination increases the filtration efficiency.

Making the corrugated filter material 4 gradually expanding from the smaller base 2 to the larger base allows the conicity (taper) of the filter material 4 to be achieved, which is used to reduce the pressure drop across the surface of the corrugated filter material 4 minimizing the energy consumption for the filtration process, and therefore, increases the filtration efficiency.

The design of the larger filter base in the form of a ring 6 with bead allows the corrugated filter material 4 to be hermetically glued to the ring 6, which eliminates possible leaks of uncleaned air, therefore, increasing the filtration efficiency. The presence of the bead 7 at the ring 6 makes it possible to tightly install the frameless channel filter in the air channel of the ventilation system, preventing the passage of uncleaned air. In this case, the tightness of the installation is provided by the sealing ring 9 glued to the bead 7.

The presence of the internal auxiliary element 8 in the large base allows tight installation of the filter in the air channel of the ventilation system, i. e. conveniently, quickly, without distortions and damage to the frameless channel filter, which also increases the filtration efficiency.

The design of the frameless channel filter with the smaller base 2 connected to the guide ring 1 by means of the plates 3 makes it possible to order the incoming (outgoing) air flow because the air passes between the guide ring 1 and the smaller base 2 and also is broken up into smaller laminar non-vortex flows by the plates 3, which influences the process of air filtration by the corrugated filter material 4, and therefore, increases the air filtration efficiency. In this case, three plates 3 are most often enough for the standard diameters of the ventilation system channels. The shape of the plates 3 can be different, i.e. rectangular, arcuate, curved, etc. The shape of the plates 3 and the number of the plates 3 are selected based on the conditions of air flow in the channel of the ventilation system in order to increase the efficiency of air filtration with the frameless channel filter. Also, the presence of three plates 3 allows to conveniently take (hold) the frameless channel filter by them. In ventilation systems with a high air flow rate, more than three plates 3 are most often used, since it is necessary to provide the structuring of the air flow and prevent its stagnation or turbulence; 3-4 plates 3 are most often used with an air flow of 5.5-7.9 m/s, 4-6 plates 3 are most often used with an air flow of 8.0-10.7 m/s, but it is possible to use another number of the plates 3 at given (but not specified) air flow rates, depending on the configuration of the ventilation system channel and materials of construction of the frameless channel filter.

The shape of the corrugated filter material 4 (in the form of a truncated cone or truncated pyramid with rounded faces) is selected based on the parameters of the air flow passing in the air channel of the ventilation system.

Depending on the operating conditions of the frameless channel filter (air flow parameters and characteristics of impurities), the filter material 4 with filtration classes from G2 to H13 is selected to ensure effective air filtration. In one embodiment of the frameless channel filter, a HEPA filter was used.

The flute height 12 depends on the diameter of the air channel. For standard diameters, a flute height of 12.5 mm is most often used. But the allowable range of the flute heights 12 is from 11 mm to 14 mm, as if the height 12 is less than 11 mm, then the corrugated filter material 4 collapses and the area of the filtering material decreases, but if it is more than 14 mm, then the working area of the filter material 4 decreases, which leads to deterioration in filtration performance.

The design of the frameless channel filter with the bead 7, with the diameter of the bead lesser than the diameter of the ring 6, makes it possible to avoid reducing the diameter of the ring 6 (the ring 6 with bead), which provides the greatest possible filtration area of the corrugated filter material 4 in conditions of a limited diameter of the air channel of the ventilation system. All of these influences the filtration efficiency.

The design of the frameless channel filter, in which the inner auxiliary element 11 is made in the form of three plate bridges connected in the center and proceeding from the inner surface of the inner auxiliary element, influences the convenience of installation of the frameless channel filter in the air channel of the ventilation system.

In the materials of the present application, the preferred disclosure of the implementation of the claimed technical solution is presented, which should not be used as limiting other, particular embodiments of its implementation that do not go beyond the claimed scope of protection and are obvious to those skilled in the relevant field of art.

The frameless channel filter operates as follows:
The frameless channel filter is installed in the air channel, while holding it by the internal auxiliary element 8. The frameless channel filter is located in the air channel and at the same time, due to the presence of the sealing ring 9 fixed on the bead 7, the filter is tightly installed in the channel, providing hermeticity and ensuring impossibility of air passage through the channel bypassing the filter. Further, the air flow, being pulled from the outdoor into the channel, floats onto the smaller base 2 with the guide ring 1, wherein the air flow is split by the plates 3 connecting the smaller base 2 with the guide ring 1 into three uniform flows, which is most optimal for further distribution of air flows on the corrugated filter material 4, because it allows to eliminate turbulence of air flows, then the air divided into three structured flows gradually penetrates through the corrugated filter material 4, which has the corrugation opening angle 5 of 10-15 degrees, which is most optimal for efficient filtration, since if the opening angle is less than 10 degrees, then the filter material collapses and the area of the filtering material decreases, and if the angle is too large (more than 15 degrees), then the working area of the filter material decreases, which leads to deterioration in filtration performance. Therefore, the air passing through the corrugated filter material 4 with the corrugation opening angle 5 of 10-15 degrees, is cleaned of fine particles and aerosols, wherein the corrugation opening angle 5 of 10-15 degrees is the optimal parameter, in terms of the optimal ratio of the effective filtration area and the filtration quality while maintaining the required dimensions of the filter itself, and in turn increases the filtration efficiency. The fact that the filter material 4 is made gradually expanding from the smaller base to the larger base allows increasing the area of the filtering surface, reducing the pressure drop across the filter, which minimizes the energy consumption for the filtration process, and ensuring the passage of air through the surfaces of the corrugated filter material 4. Further, a stream of purified air is formed inside the filter, which air moves towards the larger base of the filter, made in the form of a ring 6 with bead. Due to the fact that the sealing ring 9 is fixed on the bead 7 of the ring 6, uncleaned air cannot penetrate beyond the frameless channel filter. The sealing ring 9 separates and seals areas of the purified air and the polluted air, which improves the quality and efficiency of filtration. Therefore, the purified air flow leaves the filter unimpeded (without forming stagnation).

Therefore, the claimed inventions "frameless channel filter" increase the air filtration efficiency and provide ease of installation of the frameless channel filter in the air channel as a result of the optimal location of the surfaces of the corrugated filter material (resulted from the design features of the frameless channel filter) in the closed space of the air channel and the presence of elements (the internal auxiliary element, sealing ring) that increase the convenience of installation of the filter, due to increasing the filtering surface area, decreasing in energy consumption for the filtration process, ensuring the passage of air flow through the surfaces of the corrugated filter material, and providing the speed and accuracy of installation of the frameless channel filter to the air channel.

## Claims

1. A frameless channel filter comprising:
a smaller base with a guide ring,
a larger base made in the form of a ring with bead for fixing the filter in the channel,
a corrugated filter material,
wherein the corrugated filter material is hermetically connected to the bases and is made gradually expanding from the smaller base to the larger base.

2. The frameless channel filter of claim 1, wherein the corrugated filter material is attached to the bases with an opening angle of 10-15 degrees.

3. The frameless channel filter of claim 1, wherein the guide ring is attached to the smaller base by means of plates.

4. The frameless channel filter of claim 1, wherein the guide ring with the smaller base further comprises at least three plates.

5. The frameless channel filter of claim 1, wherein the corrugated filter material, which is made gradually expanding from the smaller base to the larger base, has the form of a truncated cone.

6. The frameless channel filter of claim 1, wherein the corrugated filter material, which is made gradually expanding from the smaller base to the larger base, has the form of a truncated pyramid with rounded faces.

7. The frameless channel filter of claim 1, wherein the corrugated filter material with filtration classes from G2 to H13 is used.

8. The frameless channel filter of claim 1, wherein a HEPA filter is used as the corrugated filter material.

9. The frameless channel filter of claim 1, wherein the corrugated filter material is made with a flute height from 11 to 14 mm.

10. A frameless channel filter comprising:
a smaller base with a guide ring,
a corrugated filter material,
a larger base in the form of a ring with bead for fixing the filter in the channel and an internal auxiliary element,
wherein a sealing ring is fixed on the outer surface of the bead of the larger base.

11. The frameless channel filter of claim 10, wherein the diameter of the bead is less than the diameter of the ring.

12. The frameless channel filter of claim 10, wherein the sealing ring is made of rubber.

13. The frameless channel filter of claim 10, wherein the smaller base is connected to the guide ring by means of plates configured to serve as a handle when installing the filter.

14. The frameless channel filter of claim 10, wherein the internal auxiliary element is made in the form of a plate bridge.

15. The frameless channel filter of claim 10, wherein the inner auxiliary element is made in the form of at least two plate bridges connected in the center and proceeding from the inner surface of the inner auxiliary element.

16. A frameless channel filter comprising:
a smaller base with a guide ring,
a larger base in the form of a ring with bead and an internal auxiliary element,
a corrugated filter material, which is hermetically connected to the bases and is made gradually expanding from the smaller base to the larger base,
wherein a sealing ring is fixed on the outer surface of the bead of the larger base,
and the corrugated filter material is attached to the bases with an opening angle of 10 to 15 degrees.
